# EUROPÄISCHE PATENTSCHRIFT

(11) **EP 1 345 974 B1**
(45) Veröffentlichungstag und Bekanntmachung des Hinweises auf die Patenterteilung: **14.01.2009**
(21) Anmeldenummer: 01270567.9
(22) Anmeldetag: 03.12.2001
(51) Int. Cl.: C08G 18/10, C08G 18/76, C08G 18/40, C08G 18/48, C08G 18/75

(54) **VERFAHREN ZUR HERSTELLUNG VON POLYURETHANELASTOMEREN MIT HOHEM WÄRMESTANDVERHALTEN**
METHOD FOR PRODUCING POLYURETHANE ELASTOMERS HAVING HIGH HEAT RESISTANCE
PROCEDE POUR LA PRODUCTION D'ELASTOMERES POLYURETHANNES A RESISTANCE THERMIQUE ELEVEE

(30) Priorität: 14.12.2000 DE 10062410
(43) Veröffentlichungstag der Anmeldung: 24.09.2003
(73) Patentinhaber: Bayer MaterialScience AG, 51368 Leverkusen (DE)
(72) Erfinder: HAAS, Peter, 42781 Haan (DE); ARNTZ, Hans-Detlef, 53797 Lohmar (DE)
(86) Internationale Anmeldenummer: PCT/EP2001/014091
(87) Internationale Veröffentlichungsnummer: WO 2002/048231

(56) Entgegenhaltungen:
- EP-A- 0 553 917
- US-A- 4 720 535
- US-A- 4 808 690
- US-A- 5 672 635
- US-A- 5 889 068
- US-A- 5 990 258

## Beschreibung

Die Erfindung betrifft ein Verfahren zur Herstellung von Polyurethanelastomeren mit einem hohen Wärmestandverhalten (HDT-Wert/Heat-distortion-temperature).

Es ist bekannt, dass zur Herstellung von Polyurethan-Werkstoffen mit einem hohen Wärmestandverhalten vornehmlich solche Polyurethanelastomeren eingesetzt werden, die aromatische Amine als Kettenverlängerer enthalten. Solche Polyurethanelastomere enthalten einen bestimmten Anteil an Harnstoffsegmenten, wodurch das Wärmestandverhalten der Polyurethanelastomere verbessert wird. Nachteilig für den Einsatz von Polyurethanelastomeren, die aromatische Amine als Kettenverlängerer enthalten, ist deren hohe Reaktivität, was eine schnelle Verarbeitung mit kurzen Reaktionszeiten der Polyurethanelastomeren zu den Polyurethan-werkstoffen bedingt. Außerdem zeigen die Polyurethanelastomere, die aromatische Amine als Kettenverlängerer enthalten, im Reaktionsgemisch ein nicht befriedigendes Fließverhalten bei der Verarbeitung zu entsprechenden Werkstoffen.

Im Gegensatz zu den Polyurethanelastomeren mit aromatischen Aminen als Kettenverlängerer besitzen glykolvernetzte Polyurethanelastomere eine geringere Reaktivität und ein verbessertes Fließverhalten. Leider ist jedoch die thermische Belastbarkeit der daraus hergestellten Polyurethan-Werkstoffe geringer als bei den Polyurethanelastomeren mit aromatischen Aminen als Kettenverlängerer. Um bei den glykolvernetzten Polyurethanelastomeren ein verbessertes Wärmestandverhalten zu erreichen, ist es erforderlich, die daraus hergestellten Werkstoffe längere Zeit zu tempern.

Aufgabe der vorliegenden Erfindung war es nun Polyurethanelastomere bereitzustellen, die ein höheres Wärmestandverhalten aufweisen, eine geringe Temperzeit benötigen und ein gutes Fließverhalten aufweisen, d.h. gegenüber den bisher bekannten Polyurethanelastomeren ein verbessertes Verarbeitungsverhalten zeigen, verbunden mit einem erhöhten Wärmestandverhalten der daraus hergestellten Polyurethanwerkstoffe.

Es wurde nun gefunden, dass glykolvernetzte Polyurethanelastomere die Aufgabe erfüllen können, wenn die eingesetzten Polyether- oder Polyesterpolyole eine Starterfunktionalität aufweisen, die mindestens 2 beträgt, und die bei der Herstellung der eingesetzten NCO-Prepolymere verwendeten Polyether- oder Polyesterpolyole eine Starterfunktionalität von mindestens 4 aufweisen.

Gegenstand der Erfindung ist daher ein Verfahren zur Herstellung von Polyurethanelastomeren, das dadurch gekennzeichnet ist, dass man
a) ein Polyether- oder Polyesterpolyol oder ein Gemisch der beiden Polyole mit einer Molmasse von 500 bis 18 000 und einer Starterfunktionalität von mindestens 2 in Gegenwart
b) eines glykolischen Kettenverlängerers mit mindestens zwei Hydroxygruppen pro Molekül und einer Molmasse von 62 bis 499
   sowie in Gegenwart
c) eines Katalysators mit
d) einem NCO-Prepolymeren mit einem NCO-Gehalt von höchstens 28 %, basierend auf einem Polyisocyanat der MDI- oder HMDI-Reihe und einem Polyether- oder Polyesterpolyol oder einem Gemisch der beiden Polyole mit einer Molmasse von 500 bis 18 000 und einer Starterfunktionalität von mindestens 4, umsetzt,
wobei, bezogen auf das resultierende Polyurethanelastomer, das Polyether- oder das Polyesterpolyol oder deren Gemisch a) in Mengen von 25 bis 50 Gew.-%, bevorzugt 30 bis 40 Gew.-%, der glykolische Kettenverlängerer b) in Mengen von 6 bis 14 Gew.-%, bevorzugt 8 bis 12 Gew.-%, der Katalysator c) in Mengen von 0,05 bis 0,5 Gew.-%, bevorzugt 0,1 bis 0,4 Gew.-%, und das dem NCO-Prepolymeren zugrundeliegende Polyisocyanat d) in Mengen von 40 bis 65, bevorzugt 45 bis 60 Gew.-%, eingesetzt werden.

Als Polyether- oder Polyesterpolyole der Komponente a) werden bevorzugt solche eingesetzt, die eine Molmasse von 2000 bis 16.000 besitzen und eine Starterfunktionalität von 3 bis 6 aufweisen.

Solche Polyether- oder Polyesterpolyole sind dem Fachmann bekannt und beispielsweise in G. Oertel Kunststoffhandbuch, Band 7, Carl Hanser Verlag, 3. Auflage, München/Wien 1993, S. 57 bis 75 näher beschrieben. Der Aufbau der Polyetherketten kann in bekannter Weise durch Alkoxylierung von entsprechenden Starterverbindungen bewerkstelligt werden, wobei als Alkoxylierungsagenzien bevorzugt Ethylen und/oder Propylen verwendet werden. Als Starter werden bevorzugt solche hydroxygruppenhaltige Verbindungen ausgewählt, die eine Starterfunktionalität bei den Polyether- und/oder Polyesterpolyolen ergeben, die oben erwähnt wurden, nämlich eine Starterfunktionalität von mindestens 2 bei der Komponente a) und von mindestens 4 bei der Komponente d). Als Starterverbindungen kommen beispielsweise in Betracht Sorbit, Succrose, Pentaerythrit, Glycerin, Trimethylolpropan, Propylenglykol, Ethylenglykol, Butylenglykol und Wasser, wobei die Startergemische (der Wasserzusatz) so bemessen werden (wird), dass die beschriebenen Funktionalitäten resultieren (erhalten werden).

Die Polyesterpolyole werden ebenfalls in bekannter Weise aufgebaut durch Polykondensation von mehrfunktionellen Carbonsäuren mit entsprechenden Hydroxylverbindungen, durch Polykondensation von Hydroxycarbonsäuren, durch Polymerisation von Ringestern (Lactonen), durch Polyaddition von Carbonsäureanhydriden mit Epoxiden sowie durch Umsetzung von Säurechloriden mit Alkalisalzen von Hydroxyverbindungen. Bevorzugt werden die Polyester hergestellt durch Polykondensation von mehrfunktionellen Carbonsäuren wie Phthalsäure, Isophthalsäure, Terephthalsäure, Fumarsäure, Glutarsäure, Adipinsäure und Bernsteinsäure, mit geeigneten Hydroxylverbindungen wie Ethylenglykol, Diethylenglykol, Tetraethylenglyol, 1,2-propandiol, 1,4-Butandiol, 1,6-Hexandiol, Glycerin und Trimethylolpropan.

Auch bei dem Aufbau der Polyesterpolyole ist darauf zu achten, dass als Hydroxylverbindungen solche eingesetzt werden, die die zuvor erwähnten Starterfunktionalitäten ergeben.

Als glykolische Kettenverlängerer werden in dem erfindungsgemäßen Verfahren bevorzugt solche eingesetzt mit 2 bis 6 Hydroxygruppen pro Molekül und einer Molmasse von 62 bis 499. Zu erwähnen sind beispielsweise Ethylenglykol, Butylenglykol, Anhydrosorbit, Bis-(hydroxyethyl)hydrochinon, Bis-(hydroxyethyl)-bisphenol A, insbesondere Ethylenglykol, 1,4-Butandiol, 1,3-Butandiol sowie 1,4-Bis-(2-hydroxyethyl)hydrochinon oder beliebige Gemische daraus.

Als Katalysatoren für die Herstellung der Polyurethanelastomeren kommen alle bekannten Katalysatoren bzw. Katalysatorsysteme in Betracht, die in der Polyurethanchemie bekannt sind. Verwiesen wird in diesem Zusammenhang beispielsweise auf das oben erwähnte Kunststoffhandbuch, Band 7 (Polyurethane), 3., neu bearbeitete Auflage, Carl Hanser Verlag, München/Wien 1993, Seite 104 ff. Besonders zu erwähnen sind insbesondere Katalysatoren auf Basis von tertiären Aminen, wie Diazobicyclo[2.2.2]octan, N-Methylimidazol, Dimethylaminopropylamin, 1,5-Diazabicyclo[4.3.0]non-5-en, und 1,8-Diazabicyclo[5.4.0]undec-7-en, sowie metallorganische Verbindungen, wie Dialkylzinnalkylmercaptide, Dialkylzinncarboxylate, Zinn(II)-carboxylate, Zinkcarboxylate, Dialkoxytitancarboxylate und Titanacetylacetonat.

Als Polyisocyanate der MDI-Reihe, die als Grundlage für die oben erwähnten NCO-Prepolymeren dienen, kommen die bekannten MDI-Isomeren oder deren Hydrierungsprodukte (HMDI) und das Polymer-MDI in Betracht. Zu nennen sind bevorzugt das 4,4'-MDI, 2,4'-MDI und 2,2'-MDI, insbesondere 4,4'-MDI und 4,4'-Diisocyanatodicyclohexylmethan-Isomere.

Selbstverständlich können die eingesetzten Isocyanate noch modifiziert sein, beispielsweise durch Biuret-, Allophanat- oder Carbodiimidgruppen. Dabei kann der Gehalt an den genannten Gruppen bis zu 30 Gew.-%, bezogen auf das eingesetzte Isocyanat betragen.

Bei dem erfindungsgemäßen Verfahren werden - wie zuvor erwähnt - die Polyisocyanate in Form ihrer NCO-Prepolymere mit den genannten Polyolen bzw. Kettenverlängerern umgesetzt, wobei die eingesetzten NCO-Prepolymeren einen NCO-Gehalt von höchstens 28 %, bevorzugt 14 bis 28 %, insbesondere 16 bis 26 % aufweisen.

Selbstverständlich können bei dem erfindungsgemäßen Verfahren noch weitere in der Polyurethanchemie bekannte Hilfs- und Zusatzstoffe eingesetzt werden, wie Tenside, Treibmittel, Flammschutzmittel, Füllstoffe, Alterungsschutzmittel, Trennmittel, Farbmittel, Biocide oder Antistatika. Die einzusetzenden Mengen solcher Hilfs- und Zusatzstoffe richten sich nach dem jeweiligen Einsatzzweck der hergestellten Polyurethanelastomere und können leicht durch entsprechende Vorversuche ermittelt werden. Solche Hilfs- und Zusatzstoffe sind ebenfalls in dem zuvor erwähnten Kunststoffhandbuch erwähnt und beschrieben.

Ein weiterer Gegenstand der vorliegenden Erfindung sind auch die nach dem erfindungsgemäßen Verfahren hergestellten Polyurethanelastomeren sowie deren Verwendung zur Herstellung von Automobil- oder Nutzfahrzeugteilen, wie Kotflügel, Fahrzeugdächer, Motorhauben, Windabweiser und Türelemente.

### Beispiele

a) eingesetzte Polyole:
   Polyol 1:
      Polyetherpolyol der OH-Zahl 28, erhältlich durch Addition von Propylenoxid und
      Ethylenoxid (im Verhältnis 80:20) an Trimethylolpropan als Starter mit 90 % primären OH-Gruppen. Starterfunktionalität: 3; Molmasse: 6000;
   Polyol 2:
      Polyetherpolyol der OH-Zahl 35, erhältlich durch Addition von Propylenoxid und
      Ethylenoxid (80:20) an Pentaerythrit als Starter mit 90 % primären OH-Gruppen. Starterfunktionalität: 4, Molmasse: 6400;
   Polyol 3:
      Polyetherpolyol der OH-Zahl 28, erhältlich durch Addition von Propylenoxid und
      Ethylenoxid (80:20) an Sorbit als Starter mit 90 % primären OH-Gruppen. Starterfunktionalität: 6, Molmasse: 12.000;
b) eingesetzte Prepolymere:
   Prepolymer 1 ;
      Prepolymer mit einem NCO-Gehalt von 24 %, erhältlich aus zu 23 % carbodiimidisiertem 4,4'-Diisocyanatodiphenylmethan mit 29 % NCO-Gehalt und Polyol 1
   Prepolymer 2:
      Prepolymer mit einem NCO-Gehalt von 24 %, erhältlich aus zu 23 % carbodiimidisiertem 4,4'-Diisocyanatodiphenylmethan mit 29 % NCO-Gehalt und Polyol 2
   Prepolymer 3:
      Prepolymer mit einem NCO-Gehalt von 24 %, erhältlich aus zu 23 % carbodiimidisiertem 4,4'-Diisocyanatodiphenylmethan mit 29 % NCO-Gehalt und Polyol 3

In der nachstehenden Tabelle sind die Rezepturangaben in Gew.-%, bezogen auf das gebildete PU-Elastomere sowie das Wärmestandverhalten der erhaltenen PU-Elastomeren (HDT-Wert/Heat-distortion-temperature, bestimmt nach DIN53 461), aufgeführt.

**Tabelle**

| Beispiel | Vergleichsbeispiel | Beispiel 1 | Beispiel 2 | Beispiel 3 | Beispiel 4 | Beispiel 5 | Beispiel 6 |
|---|---|---|---|---|---|---|---|
| Polyol 1 | 25,4 | 25,4 | - | - | 25,4 | - | - |
| Polyol 2 | - | - | 25,4 | - | - | 25,4 | - |
| Polyol 3 | - | - | - | 25,4 | - | - | 25,4 |
| EG¹ | 10 | 10 | 10 | 10 | 10 | 10 | 10 |
| Stabilisator B8411 (Goldschmidt) | 0,5 | 0,5 | 0,5 | 0,5 | 0,5 | 0,5 | 0,5 |
| DABCO 33LV² | 0,25 | 0,25 | 0,25 | 0,25 | 0,25 | 0,25 | 0,25 |
| DBTDL³ | 0,05 | 0,05 | 0,05 | 0,05 | 0,05 | 0,05 | 0,05 |
| Prep. 1 | 63,8 | | | | | | |
| Prep. 2 | - | 63,8 | 63,8 | 63,8 | | | |
| Prep.3 | - | - | - | - | 63,8 | 63,8 | 63,8 |
| HDT (°C) (ungetempert) | 59 | 84 | 84 | 84 | 89 | 87 | 92 |
| HDT (°C) nach Temperung (4 h 120°C) | 90 | | 139 | | | | 140 |

| | | | | | | | |
|---|---|---|---|---|---|---|---|
| ¹EG = Ethylenglykol ²DABCO 33 LV = kommerziell erhältlicher Katalysator von Air Products ³DBTDL = Dibutylzinndilaurat | | | | | | | |

Die HDT-Werte beziehen sich auf ein Formteil (Platte) der Größe 200 x 200 x 2 mm, das bei 60°C Formtemperatur unter üblichen Verarbeitungsbedingungen durch Hochdruckvermischung der Komponenten hergestellt wurde.

Aus der Tabelle ist ersichtlich, dass verbesserte HDT-Werte sowohl in getempertem als auch ungetempertem Zustand erhalten werden, wenn Polyole mit einer Starterfunktionalität von mindestens 4 auf der Prepolymerseite eingesetzt werden und auf der Polyolseite solche mit einer Starterfunktionalität von mindestens 2.

## Patentansprüche

1. Verfahren zur Herstellung von Polyurethanelastomeren, **dadurch gekennzeichnet, dass** man
a) ein Polyether- oder Polyesterpolyol oder ein Gemisch der beiden Polyole mit einer Molmasse von 500 bis 18 000 und einer Starterfunktionalität von mindestens 2 in Gegenwart
b) eines glykolischen Kettenverlängerers mit mindestens zwei Hydroxygruppen pro Molekül und einer Molmasse von 62 bis 499
sowie in Gegenwart
c) eines Katalysators mit
d) einem NCO-Prepolymeren mit einem NCO-Gehalt von höchstens 28 %, basierend auf einem Polyisocyanat der MDI- oder der HMDI-Reihe und einem Polyether- oder Polyesterpolyol oder einem Gemisch der beiden Polyole mit einer Molmasse von 500 bis 18 000 und einer Starterfunktionalität von mindestens 4, umsetzt,
wobei, bezogen auf das resultierende Polyurethanelastomer, das Polyether- oder das Polyesterpolyol oder deren Gemisch a) in Mengen von 25 bis 50 Gew.%, der glykolische Kettenverlängerer b) in Mengen von 6 bis 14, der Katalysator c) in Mengen von 0,05 bis 0,5 Gew.-% und das dem NCO-Prepolymeren zugrundeliegende Polyisocyanat d) der MDI-Reihe in Mengen von 40 bis 65 Gew.% eingesetzt werden.

2. Verfahren nach Anspruch 1, **dadurch gekennzeichnet, dass** als Polyether- oder Polyesterpolyole (a) solche eingesetzt werden, die eine Molmasse von 2000 bis 16.000 besitzen und eine Starterfunktionalität von 3 bis 6 aufweisen.

3. Verfahren nach Anspruch 1, **dadurch gekennzeichnet, dass** die Polyether- oder Polyesterpolyole oder deren Gemische (a) in Mengen von 30 bis 40 Gew.-%, die glykolischen Kettenverlängerer (b) in Mengen von 8 bis 12 Gew.-%, der Katalysator (c) in Mengen von 0,1 bis 0,4 Gew.-% und das dem NCO-Prepolymeren zugrundeliegende Polyisocyanat in Mengen von 45 bis 60 Gew.-% eingesetzt werden.

4. Polyurethanelastomere erhältlich durch das in Anspruch 1 beschriebene Verfahren.

## Claims

1. A process for the preparation of polyurethane elastomers, **characterised in that**
a) a polyether or polyester polyol or a mixture of the two polyols having a molecular weight from 500 to 18,000 and a starter functionality of at least 2, in the presence of
b) a glycolic chain extender having at least two hydroxyl groups per molecule and a molecular weight from 62 to 499
and in the presence of
c) a catalyst
is reacted with
d) an NCO prepolymer with an NCO content of at most 28%, based on a polyisocyanate of the MDI or HMDI series and a polyether or polyester polyol or a mixture of the two polyols having a molecular weight from 500 to 18,000 and a starter functionality of at least 4,
wherein, based on the resulting polyurethane elastomer, the polyether or polyester polyol or mixture thereof a) is used in amounts from 25 wt.% to 50 wt.%, the glycolic chain extender b) in amounts from 6 wt.% to 14 wt.%, the catalyst c) in amounts from 0.05 wt.% to 0.5 wt.%, and the polyisocyanate d) of the MDI series on which the NCO prepolymer is based is used in amounts from 40 wt.% to 65 wt.%.

2. A process according to claim 1, **characterised in that** the polyether or polyester polyols a) used are those having a molecular weight from 2000 to 16,000 and a starter functionality from 3 to 6.

3. A process according to claim 1, **characterised in that** the polyether or polyester polyols or mixtures thereof a) are used in amounts from 30 wt.% to 40 wt.%, the glycolic chain extenders b) in amounts from 8 wt.% to 12 wt.%, the catalyst c) in amounts from 0.1 wt.% to 0.4 wt.%, and the polyisocyanate on which the NCO prepolymer is based is used in amounts from 45 wt.% to 60 wt.%.

4. Polyurethane elastomers which may be obtained by the process described in claim 1.

## Revendications

1. Procédé de fabrication d'élastomères de polyuréthane, **caractérisé en ce que** l'on met à réagir
a) un polyol polyéther ou un polyol polyester ou un mélange des deux polyols ayant une masse molaire de 500 à 18 000 et une fonctionnalité d'amorçage d'au moins 2 en présence de
b) un allongeur de chaîne glycolique ayant au moins deux groupes hydroxy par molécule et une masse molaire de 62 à 499,
ainsi qu'en présence de
c) un catalyseur, avec
d) un prépolymère de type NCO ayant une teneur en NCO d'au plus 28 %, reposant sur un polyisocyanate de la série MDI ou HMDI et un polyol polyéther ou un polyol polyester ou un mélange des deux polyols ayant une masse molaire de 500 à 18 000 et une fonctionnalité d'amorçage d'au moins 4,
où, en fonction de l'élastomère de polyuréthane résultant, on utilise le polyol polyéther ou le polyol polyester ou leur mélange a) en quantités de 25 à 50 % en poids, l'allongeur de chaîne glycolique b) en quantités de 6 à 14 % en poids , le catalyseur c) en quantités de 0,05 à 0,5 % en poids et le polyisocyanate à base du prépolymère de type NCO d) de la série MDI en quantités de 40 à 65 % en poids.

2. Procédé selon la revendication 1, **caractérisé en ce que** l'on utilise comme polyol polyéther ou polyol polyester (a) ceux qui présentent une masse molaire de 2 000 à 16 000 et une fonctionnalité d'amorçage de 3 à 6.

3. Procédé selon la revendication 1, **caractérisé en ce que** les polyols polyéthers ou polyesters ou leurs mélanges (a) sont utilisés en quantités de 30 à 40 % en poids, l'allongeur de chaîne glycolique (b) en quantités de 8 à 12 % en poids, le catalyseur (c) en quantités de 0,1 à 0,4 % en poids et le polyisocyanate à base du prépolymère de type NCO en quantités de 45 à 60 % en poids.

4. Elastomères de polyuréthane susceptibles d'être obtenus par le procédé décrit à la revendication 1.
